# FASCICULE DE BREVET EUROPEEN

(11) **EP 2 282 827 B1**
(45) Date de publication et mention de la délivrance du brevet: **31.07.2013**
(21) Numéro de dépôt: 09750009.4
(22) Date de dépôt: 05.05.2009
(51) Int. Cl.: G01N 27/447, B01J 20/28, B82Y 30/00, B01J 20/20

(54) **Dispositif de séparation de biomolécules d'un fluide**
Vorrichtung zur Trennung von Biomolekülen aus einer Flüssigkeit
Device for separating biomolecules from a liquid

(30) Priorité: 06.05.2008 FR 0802523
(43) Date de publication de la demande: 16.02.2011
(73) Titulaire: Commissariat à l'Énergie Atomique et aux Énergies Alternatives, 75015 Paris (FR)
(72) Inventeur: PUGET, Pierre, F-38330 Saint Ismier (FR); RICOUL, Florence, F-38950 Quaix en Chartreuse (FR)
(74) Mandataire: Gris, Sébastien
(86) Numéro de dépôt international: PCT/FR2009/000531
(87) Numéro de publication internationale: WO 2009/141528

(56) Documents cités:
- WO-A-2006/042276
- WO-A-2006/122697
- US-A1- 2004 173 506
- US-B1- 7 290 667

## Description

### Domaine technique de l'invention

L'invention est relative à un dispositif de séparation de biomolécules d'un fluide comportant un composant microfluidique muni d'au moins un microcanal ayant au moins une des parois portant une pluralité de nanotubes ou nanofils, ledit le composant comportant au moins une électrode connectée électriquement à au moins une partie des nanotubes ou nanofils, le dispositif comportant des moyens d'application d'une tension entre l'électrode et le fluide.

### État de la technique.

Il existe des microsystèmes du type laboratoire sur puce (« lab-on-a-chip » en anglais) pour réaliser des analyses et/ou des opérations sur des échantillons chimiques ou biologiques de petite taille. Les technologies de micro et nanoélectronique permettent, grâce à la miniaturisation, d'intégrer de plus en plus de fonctions dans un même composant microfluidique. Classiquement ces fonctions consistent à prétraiter l'échantillon, à le filtrer, le séparer, le détecter, etc.

De récents développements ont permis l'utilisation de nanotubes de carbone. Ainsi, la demande de brevet internationale WO-A-2006/122697 décrit un composant microfluidique, illustré à la figure 1, comportant au moins un canal permettant le passage d'un fluide. Le canal 1 est, de référence, un canal fermé, c'est-à-dire qu'il comporte une entrée et une sortie du fluide et qu'il est délimité par une paroi inférieure 2, deux parois latérales 3a et 3b opposées l'une en regard de l'autre et une paroi supérieure 4. La paroi inférieure 2 et les parois latérales 3a et 3b sont réalisées dans un support, de préférence un substrat de silicium, et la paroi supérieure 4 peut être formée par un capot, de préférence scellé au substrat. Au moins une des parois 2, 3a, 3b porte une pluralité de nanotubes 9. La réalisation de nanotubes horizontaux (parallèles à la paroi inférieure 2) dans le canal permet d'obtenir un composant fluidique présentant une surface de traitement accrue.

La demande de brevet internationale WO 01/63273 décrit un dispositif (figure 2) comportant un composant microfluidique muni d'un microcanal délimité par une paroi inférieure 2 et deux parois latérales 3a et 3b. Le microcanal porte sur sa paroi inférieure 2 une pluralité de nanotubes 9 de carbone. Chaque extrémité du microcanal 1 comporte un réservoir 5a, 5b apte à recevoir un fluide comportant des molécules chargées 6. Les réservoirs 5a et 5b, placés à chaque extrémité du microcanal 1, comportent respectivement une borne négative 7 et une borne positive 8 permettant la création d'un champ électrique selon un vecteur E, le long du microcanal 1. Le champ électrique permet aux molécules présentes dans le réservoir de la borne négative 7 et chargées négativement de se déplacer en direction du réservoir de la borne positive 8 par électrophorèse. Les nanotubes du microcanal forment alors un tamis moléculaire dont l'espacement des nanotubes est adapté en fonction d'un type de molécule. Un tel dispositif nécessite la réalisation de différentes densités de tamis. De plus, dans certains cas, des molécules, notamment d'ADN, peuvent s'enrouler autour des nanotubes, formant des pièges difficiles à nettoyer.

La demande de brevet US-2004/0173506 décrit l'utilisation de nanofibres pour former une membrane et contrôler le transport de molécules. La distance séparant deux nanofibres étant représentative de la taille maximale des molécules pouvant traverser la membrane.

La demande de brevet US2007/0090026 décrit la réalisation de structures tamis en deux dimensions par des techniques classiques en microélectronique, pour améliorer la vitesse et la résolution de la séparation de biomolécules. Les structures tamis sont réalisées par gravure dans un substrat en silicium à l'aide des techniques de photolithographie et de gravure ionique réactive (ou RIE pour « Reactive-Ion Etching »), ce qui permet d'obtenir une topographie contrôlée avec une précision submicrométrique. Les structures tamis planes comprennent des canaux principaux, parallèles, de 1µm de largeur et de 300 nm de profondeur, connectés entre eux par des canaux latéraux de 1µm de largeur et de 55 nm de profondeur. Des molécules, telles que des molécules d'ADN et de protéines, peuvent passer d'un premier canal principal à un second canal principal par les canaux latéraux reliant les premier et second canaux principaux adjacents. Les surfaces du dispositif peuvent être chargées négativement. Ainsi les molécules faiblement chargées négativement peuvent passer d'un canal principal à l'autre avec une meilleure probabilité que les molécules fortement chargées négativement.

Les dispositifs de séparation actuellement proposés dans les différentes études pour séparer des molécules biologiques présentent l'inconvénient majeur d'être difficilement industrialisables, car coûteux à fabriquer. En effet, ils nécessitent l'utilisation d'étapes de lithographie qui se révèlent être très coûteuses pour réaliser des pores ou des canaux de dimension correspondant à la taille d'une molécule concernée.

### Objet de l'invention

L'invention a pour but un dispositif de séparation de biomolécules d'un fluide ne présentant pas les inconvénients de l'art antérieur.

Ce but est atteint par les revendications annexées et plus particulièrement par le fait que les nanotubes ou nanofils sont divisés en plusieurs zones actives, dans lesquelles les nanotubes ou nanofils ont une densité différente.

Selon un perfectionnement, la densité des nanotubes ou nanofils des zones actives augmente d'une zone à la suivante dans le sens de circulation du fluide.

Selon un perfectionnement, chaque zone est reliée à des électrodes distinctes, le dispositif comportant des moyens d'application de tensions différentes aux différentes électrodes.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

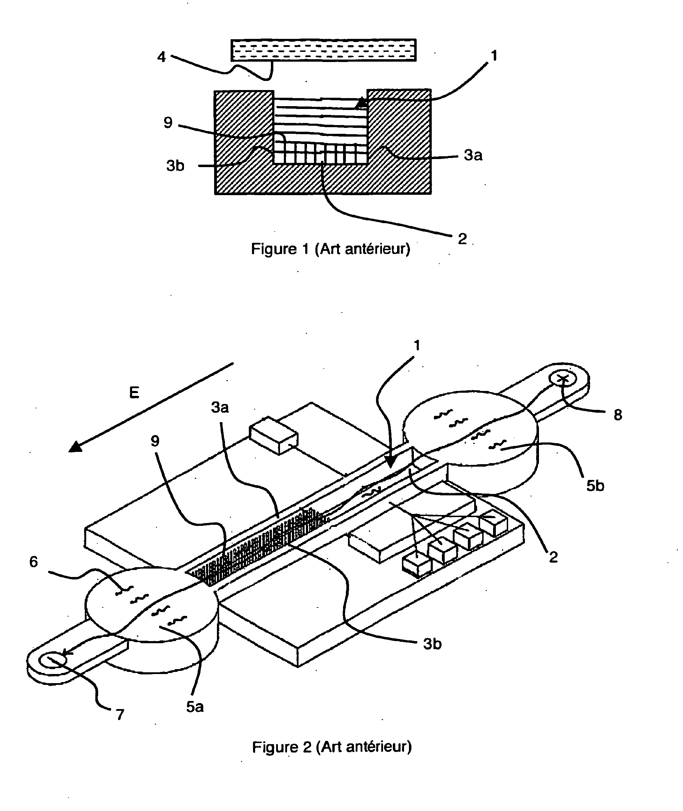

La figure 1 illustre une vue en coupe d'un composant microfluidique selon l'art antérieur.
La figure 2 illustre une vue en perspective d'un dispositif de séparation de biomolécules par électrophorèse selon l'art antérieur.
La figure 3 illustre une vue de dessus d'un dispositif selon l'invention.
La figure 4 illustre une vue en coupe selon A-A de la figure 3.
La figure 5 illustre une vue de dessus du dispositif de la figure 3, dont le couvercle a été retiré.
Les figures 6 à 8 illustrent les interactions des nanotubes du dispositif selon l'invention avec des particules chargées ou non.
Les figures 9 et 10 illustrent, en vue de dessus, sans capot, des variantes de
réalisation d'un mode de réalisation de l'invention.
La figure 11 illustre, en vue de dessus, sans capot, un second mode de réalisation.
Le figure 12 illustre, en vue de dessus, sans capot, une variante de réalisation du second mode de réalisation.

### Description de modes particuliers de réalisation

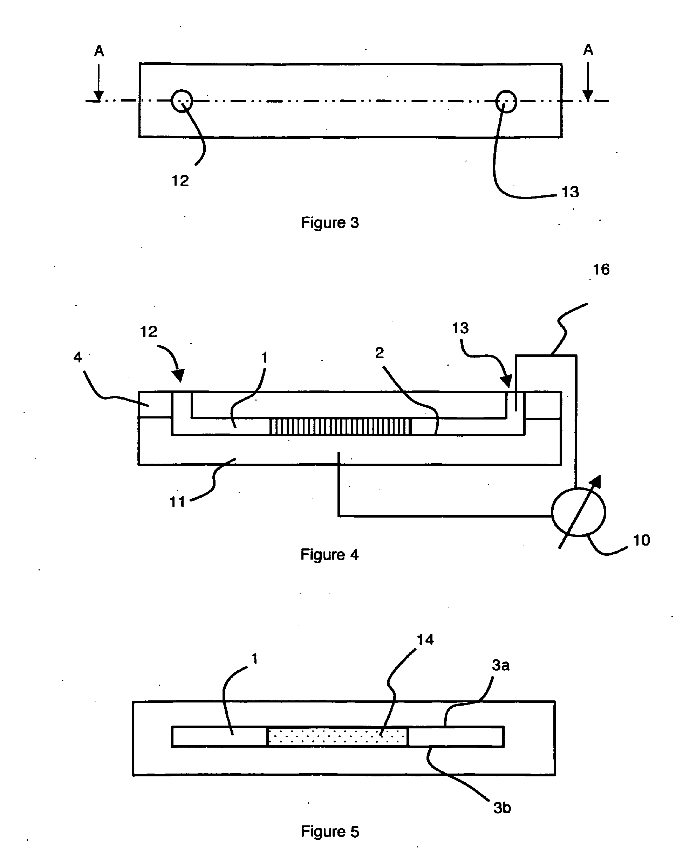

Selon un mode de réalisation particulier, illustré aux figures 3 à 5, le dispositif de séparation de biomolécules d'un fluide comporte un composant microfluidique muni d'au moins un microcanal 1, délimité par une paroi inférieure 2 et deux parois latérales 3a et 3b en regard l'une de l'autre. Le microcanal 1 est, de préférence, un microcanal fermé (figure 4) et il est délimité par une paroi supérieure 4, qui comporte une entrée 12 et une sortie 13 pour le passage du fluide.

Le fluide peut être mis en circulation dans le dispositif de séparation en appliquant, par exemple, une différence de pression entre l'entrée 12 et la sortie 13 du dispositif. À titre d'exemple, cette différence de pression peut être appliquée en utilisant un pousse seringue, une pompe péristaltique ou tout autre moyen connu de l'homme du métier. Le microcanal représenté sur les figures 3 à 5 est de forme droite, mais il peut aussi se présenter sous la forme d'une courbe, d'une spirale, d'un cercle, etc.

Ainsi le composant microfluidique peut être réalisé dans un substrat dans lequel le microcanal est creusé pour former la paroi inférieure 2 et les parois latérales 3a et 3b. La paroi supérieure 4 peut être formée par un capot de protection, de préférence scellé hermétiquement, de manière à obtenir un microcanal 1 fermé et complètement étanche. À titre d'exemple, le substrat peut être réalisé en silicium. Le dispositif comporte, de plus, des moyens 10 d'application d'une tension électrique entre une électrode 11 du composant microfluidique et le fluide. L'électrode 11 peut être formée sur une partie du microcanal par dopage local du substrat de silicium ou en utilisant un substrat entièrement dopé.

Au moins une des parois 2, 3a, 3b du microcanal porte une pluralité de nanotubes 9 ou de nanofils électriquement conducteurs constituant un réseau. Les nanotubes 9 sont, de préférence, perpendiculaires à la paroi ou aux parois qui les portent. L'électrode 11 du composant fluidique est électriquement connectée à au moins une partie des nanotubes 9. Si l'électrode 11 est constituée par le substrat dopé, tous les nanotubes sont automatiquement connectés à l'électrode. Une tension V continue, de préférence modulable, est appliquée entre l'électrode 11 et le fluide par les moyens 10 d'application de tension. Dans le mode de réalisation particulier illustré à la figure 4, une source de tension est connectée au substrat, qui constitue l'électrode 11, et au fluide, par l'intermédiaire de la sortie 13 du fluide.

Les nanotubes 9 peuvent, à titre d'exemple, être réalisés en carbone. Le carbone présente l'avantage d'être conducteur. Ainsi, la surface du nanotube permet, en faisant varier le potentiel de surface des nanotubes, de moduler l'amplitude de l'interaction électrostatique de chaque nanotube 9. Le fluide remplissant le microcanal est, de préférence, un électrolyte (solution aqueuse contenant des ions positifs et négatifs), d'autres fluides à base de solvants polaires étant envisageables. Lorsqu'un potentiel électrique V est appliqué entre les nanotubes et le fluide remplissant le microcanal, les nanotubes s'entourent, suivant le signe du potentiel électrique V, d'un nuage de contre-ions, créant ainsi une répartition non homogène des charges électriques et des champs électriques locaux. La distribution de ces contre-ions est connue sous le terme de double couche électrostatique (ici autour d'un cylindre). Le potentiel électrique vaut V à la surface du nanotube et décroit asymptotiquement vers le potentiel du fluide. Les surfaces équipotentielles ont une géométrie cylindrique centrée autour du nanotube. La longueur caractéristique de la décroissance du potentiel est appelée longueur de Debye. La longueur de Debye ne dépend pas du potentiel électrostatique mais de la concentration en ions du fluide ou solution tampon remplissant le microcanal, cette concentration est aussi appelée communément « force ionique » du tampon. Lorsque l'écartement des nanotubes est de l'ordre de la longueur de Debye ou inférieure à celle-ci, le réseau de nanotubes constitue une barrière électrostatique définie par des lignes équipotentielles et de lignes de champ électrique, perpendiculaires aux lignes équipotentielles. Ainsi, lorsque des particules ou des molécules chargées s'approchent des nanotubes, auxquels il a été appliqué un potentiel électrique, c'est-à-dire chargés électrostatiquement, les particules ou molécules dont la charge est du même signe que celle des nanotubesont tendance à être repoussées.

Le phénomène permettant la séparation des molécules en fonction de leur charge est basé sur le diamètre hydrodynamique des molécules. Le diamètre hydrodynamique (également noté Dh) correspond à la dimension (ou diamètre) de la molécule proprement dite additionnée à deux fois la longueur de Debye, notée λ_{D}. La longueur de Debye correspond à l'épaisseur de la double couche électrique entourant la molécule lorsque celle-ci est chargée. La longueur de Debye correspond en particulier à l'épaisseur d'un nuage de contre-ions équilibrant localement la charge d'une molécule lorsque celle-ci est chargée et contenue dans un fluide. Elle dépend des conditions du fluide comportant la ou les molécule(s), en particulier du type et de la concentration d'électrolyte(s) présent(s) et de la température.

La séparation des molécules contenues dans le fluide est réalisée par les barrières constituées par le réseau de nanotubes, plus particulièrement par les passages délimités par deux nanotubes adjacents. Une barrière de nanotubes est, de préférence, perpendiculaire au sens de circulation du fluide dans le microcanal, les nanotubes étant portés soit par la paroi inférieure 2, soit par les parois latérales 3a et 3b. Selon une variante, les nanotubes peuvent être portés par la paroi supérieure 4 formant le capot.

De préférence, les nanotubes formant la barrière occupent toute une section du microcanal de manière à former un alignement de nanotubes sur la totalité de la section.

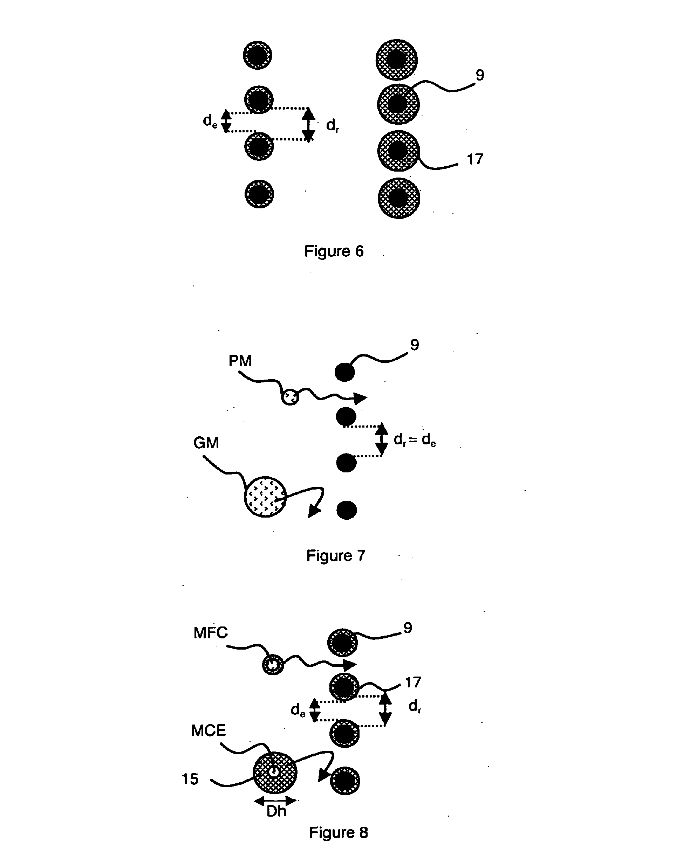

Le passage délimité par deux nanotubes 9 adjacents correspond à une distance réel dᵣ. Ainsi, comme illustré à la figure 7, les petites molécules PM, non chargées, dont le diamètre est inférieur à dᵣ, peuvent passer entre deux nanotubes adjacents, contrairement aux grosses molécules GM, non chargées, qui restent bloquées.

L'application d'une tension V entre les nanotubes et le fluide remplissant le microcanal permet d'obtenir, comme illustré aux figures 6 et 8, une distance efficace de, contrôlable, entre deux nanotubes adjacents. La distance efficace est définie par les formules suivantes :
- de = dᵣ - 2λ_{D}, où dᵣ correspond à la distance séparant deux nanotubes adjacents et λ_{D} correspond à la longueur de Debye, lorsque le réseau de nanotubes et la molécule sont chargés électrostatiquement par des charges de même signe,
- de = dᵣ, dans les autres cas, en particulier lorsque le réseau de nanotubes et la molécule sont de signes opposés ou lorsqu'ils ne sont pas chargés comme décrit ci-dessus en référence à la figure 7.

Ainsi, comme illustré à la figure 8, la distance efficace de entre les nanotubes est choisie de manière à ne laisser passer que le type de molécule désirée et il est, plus particulièrement, choisi en fonction du diamètre hydrodynamique Dh des molécules à séparer. Il est ainsi possible de séparer, en fonction de leurs charges, des molécules de taille sensiblement similaires comme l'illustre la figure 8. Les molécules à faible charge MFC (petit nuage de contre-ions 15) peuvent traverser la barrière de nanotubes 9, alors que les molécules à charge élevée MCE (gros nuage de contre-ions 15) ne peuvent franchir la barrière.

À titre d'exemple, un réseau de nanotubes chargé positivement peut bloquer des molécules chargées positivement, si la distance efficace de entre deux nanotubes adjacents est inférieure au diamètre hydrodynamique de la molécule. Par contre, si le réseau de nanotubes et la molécule sont chargés par des charges de signes opposés, il suffit que le diamètre hydrodynamique de la molécule soit supérieur à la distance réelle dᵣ séparant deux nanotubes adjacents du réseau de nanotubes.

Les moyens 10 d'application de tension permettent de modifier la tension appliquée, afin de charger les nanotubes électrostatiquement et de manière contrôlée, ce qui permet d'augmenter ou d'abaisser la probabilité de passage d'une molécule. La figure 6 représente deux rangées de nanotubes 9 dont le potentiel électrique 17 est différent. Avec des nanotubes de même diamètre, il est possible de moduler la portée des interactions électrostatiques des nanotubes 9 de carbone.

Par ailleurs, la charge électrostatique des molécules contenues dans le fluide dépend du pH de la solution constituant le fluide. Ainsi, il est possible d'adapter le pH de la solution en fonction de la charge souhaitée pour les molécules, ce qui permet également d'augmenter ou de diminuer le passage des molécules. Les molécules concernées sont très souvent des acides nucléiques ou des protéines (assemblage d'acides aminés) formant des acides faibles ionisés négativement dans certaines gammes de PH. Le fluide utilisé comme solution tampon contenant ces molécules peut alors être une solution plus ou moins chargée en sel. Les molécules chargées s'entourent alors d'un nuage de contre-ions dont le diamètre peut aller de quelques nanomètres à plusieurs dizaines de nanomètres en fonction de la concentration et de la composition des sels.

L'utilisation de nanotubes 9 électriquement conducteurs relié à l'électrode 11 permet de contrôler de façon active (en temps réel) le potentiel électrique des nanotubes 9. Ces nanotubes 9 sont distants de quelques nanomètres, une distance 10nm pouvant être envisageable. De préférence, la distance séparant deux nanotubes adjacents est comprise entre 1 et 20 nm. Ainsi, lorsqu'une tension électrique leur est appliquée, ils peuvent constituer une barrière électrostatique pour les molécules chargées dont la charge est de même signe que celle des nanotubes. En modifiant la tension entre le fluide et les nanotubes, il est possible de moduler le potentiel électrique des nanotubes, et d'ainsi, de moduler la perméabilité de la barrière électrostatique.

Un tel dispositif permet à la fois d'agir comme un tamis en fonction de l'espacement des nanotubes et/ou de retenir ou de laisser passer des molécules de charges différentes.

Ainsi, un tel dispositif peut agir comme un système de.filtration, de séparation des molécules mais aussi comme un système permettant de concentrer les molécules. Dans ce dernier cas, il suffit de retenir les molécules d'intérêt devant une section de nanotubes formant une barrière électrostatique, tout en éluant les molécules plus petites. Ensuite une fois la zone de rétention située en avant de la barrière enrichie en molécules d'intérêt, la tension électrique appliquée à la barrière est relâchée, permettant le passage des molécules d'intérêt et de recueillir une fraction d'éluat fortement enrichie en molécules d'intérêt.

La réalisation du composant microfluidique décrit ci-dessus peut utiliser le procédé décrit dans la demande de brevet WO-A-2006/122697, à partir d' un substrat de silicium dopé dont la résistivité est, de préférence, de 0,01 Ω.cm.

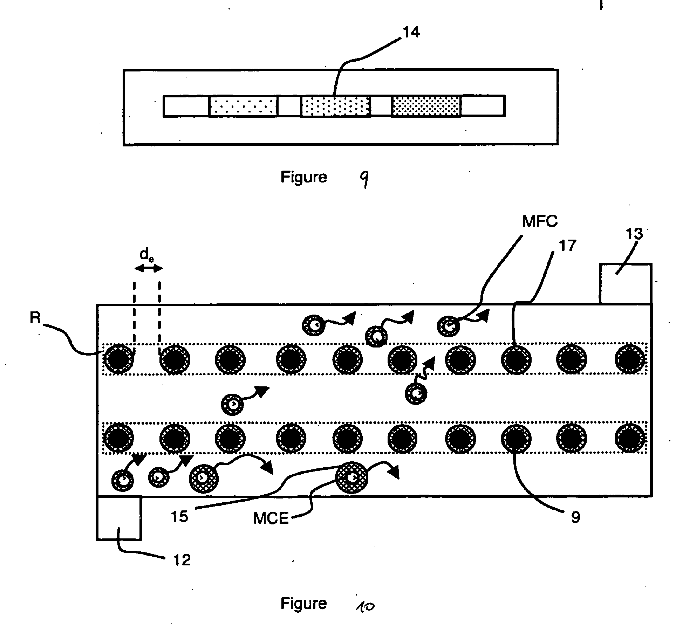

Selon une autre variante de réalisation illustrée à la figure 9, la densité des nanotubes est différente dans les différentes zones actives 14. À titre d'exemple, la densité des nanotubes augmente de zone en zone selon le sens de circulation des molécules contenues dans le fluide ( de gauche à droite sur la figure 9). Les nanotubes électriquement conducteurs peuvent être tous reliés à une même électrode (non représentée), connectée à des moyens d'application d'une tension entre l'électrode et le fluide. Ainsi, les nanotubes ont le même potentiel électrique et la séparation des biomolécules contenues dans le fluide se fait graduellement en fonction de la densité de nanotubes et du potentiel électrique des zones actives 14 traversées par le fluide.

Dans une variante de la figure 9, les nanotubes de chaque zone active sont reliés électriquement à des électrodes distinctes. Le dispositif comporte alors des moyens d'application de tensions différentes et variables pour chaque électrode. Un tel dispositif, avec un adressage électrique distinct pour chaque électrode, permet d'obtenir un potentiel électrique différent au niveau des nanotubes de chaque zone entraînant une séparation graduelle des molécules d'une zone à l'autre et modifiable en temps réel.

Il est ainsi possible d'utiliser une variation de la densité des nanotubes et/ou de la tension appliquée entre les nanotubes et le fluide pour définir la distance efficace séparant deux nanotubes adjacents et, en conséquence, la taille et/ou la charge des molécules respectivement susceptibles de traverser une barrière constituée par ces nanotubes ou d'être bloqués par cette barrière.

Pour réaliser un dispositif comportant un microcanal muni de plusieurs zones actives, le procédé décrit dans la demande internationale WO-A-2006/122697 peut être modifié en utilisant un substrat de silicium dopé localement pour former différentes électrodes, chaque électrode formant alors une zone active 14 sur laquelle les nanotubes sont formés.

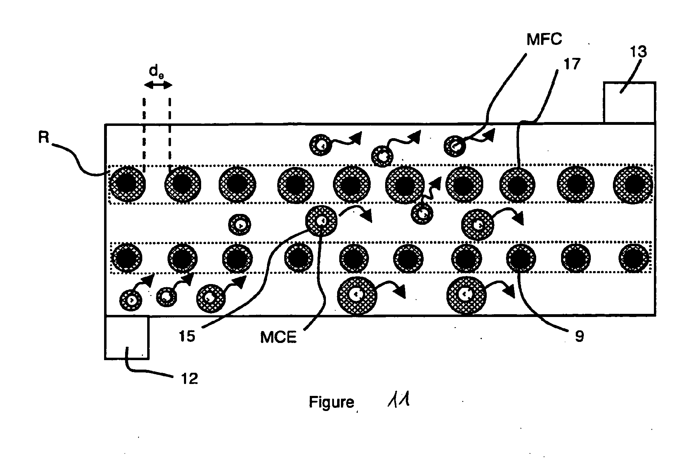

Selon un autre mode de réalisation, illustrée à la figure 10, les nanotubes 9 peuvent se présenter sous la forme de rangées R (en pointillé sur la figure 11) séparant deux nanocanaux adjacents et formant des barrières disposées légèrement obliquement par rapport au sens de circulation du fluide. La distance séparant deux rangées de nanotubes 9 est supérieure à la distance séparant deux nanotubes adjacents d'une même rangée. Dans le mode particulier de réalisation représenté aux figures 10 et 11, la direction générale d'écoulement du fluide est contrôlée pour que les rangées de nanotubes soient placées obliquement par rapport à cette direction. Sur les figures 10 et 11, par exemple, l'entrée 12 et la sortie 13 du fluide sont situées respectivement dans la partie inférieure gauche et supérieure droite, et le fluide est inséré sous pression entre l'entrée 12 et la sortie 13, soit obliquement par rapport aux rangées R de nanotubes. Seules les molécules MFC, dont le diamètre hydrodynamique est inférieur à la distance efficace de séparant les nanotubes d'une même rangée, peuvent passer la barrière formée par ces nanotube, et leur potentiel électrique 17 et, ainsi, passer dans le nanocanal supérieur des figures 10 et 11. Ainsi, sur la figure 10, les molécules MCE ayant un diamètre hydrodynamique supérieur à la distance efficace sont maintenues dans le nanocanal du bas, tandis que les molécules MFC peuvent passer dans le nanocanal du haut. Ainsi, les molécules peuvent être triées en fonction de leurs tailles et/ou de leurs charges, deux nanocanaux adjacents comportant, à leur extrémité proche de la sortie 13, des molécules de taille et/ou de charge différentes.

Selon une variante illustrée à la figure 11, un potentiel électrique 17 différent, de préférence croissant du bas vers la haut, est appliqué à chaque rangée R de nanotubes 9, permettant ainsi la séparation des molécules de taille et/où de charge différentes. Ainsi, sur la figure 11, les molécules MCE ayant un diamètre hydrodynamique inférieur à la distance efficace de la rangée du bas mais supérieur à la distance efficace de de la rangée supérieure de nanotubes sont maintenues dans le nanocanal du centre, tandis que les molécules MFC peuvent passer dans le nanocanal du haut et que d'autres molécules, dont le diamètre hydrodynamique est supérieur à la distance efficace de la rangée de nanotube inférieure restent dans le nanocanal du bas. Les rangées peuvent aussi avoir un espacement différent entre les nanotubes, permettant d'agir à la fois sur les deux facteurs de taille et de charge des molécules.

Les moyens d'application de tension 10 peuvent comporter un fil 16 de platine (figure 4) trempé dans le fluide, ou tout autre moyens adaptables par l'homme du métier.

Les modes de réalisation décrits ci-dessus permettent de séparer les molécules d'un mélange de complexité arbitraire, comme par exemple un mélange d'acides nucléiques, et/ou un mélange de protéines et/ou un mélange de peptides. Cette séparation pouvant être réalisée en continu en modifiant en temps réel la tension électrique appliquée aux nanotubes.

De plus, l'application d'une tension entre le fluide et les nanotubes permet de faciliter le nettoyage du dispositif notamment lorsque les molécules d'ADN sont enroulées sur les nanotubes, l'application d'un potentiel électrique sur les nanotubes pouvant permettre d'éloigner les molécules enroulées.

Le dispositif peut contenir une pluralité de microcanaux permettant un traitement en parallèle des molécules.

L'invention ne se limite pas aux modes de réalisations décrits ci-dessus, notamment les nanotubes peuvent être remplacés par des nanofils électriquement conducteurs, de préférence en Silicium dopé.

## Revendications

1. Dispositif de séparation de biomolécules d'un fluide comportant un composant microfluidique muni d'au moins un microcanal (1) ayant au moins une des parois (2,3a,3b) portant une pluralité de nanotubes ou nanofils (9), ledit composant comportant au moins une électrode (11) connectée électriquement à au moins une partie des nanotubes ou nanofils (9) et le dispositif comportant des moyens d'application (10) d'une tension entre l'électrode et le fluide, dispositif **caractérisé en ce que** les nanotubes ou nanofils sont divisés en plusieurs zones actives (14), dans lesquelles les densités de nanotubes ou nanofils (9) sont différentes.

2. Dispositif selon la revendication 1, **caractérisé en ce que** la densité de chaque zone (14) augmente d'une zone à la suivante, dans le sens de circulation du fluide.

3. Dispositif selon l'une des revendications 1 à 2, **caractérisé en ce que** chaque zone (14) est reliée à des électrodes distinctes, et que le dispositif comporte des moyens (10) d'application de tension différentes aux différentes électrodes.

4. Dispositif selon l'une quelconques des revendications 1 à 3, **caractérisé en ce que** les nanotubes ou nanofils (9) forment des barrières perpendiculaires au sens de direction du fluide dans le microcanal.

5. Dispositif selon l'une quelconque des revendications 1 à 3, **caractérisé en ce que** les nanotubes ou nanofils (9) forment des barrières obliques par rapport au sens de direction du fluide dans le microcanal.

6. Dispositif selon l'une quelconque des revendications 1 à 5, **caractérisé en ce que** les nanotubes (9) sont en carbone.

7. Dispositif selon l'une quelconque des revendications 1 à 5, **caractérisé en ce que** les nanofils (9) sont en silicium dopé.

## Patentansprüche

1. Vorrichtung zur Trennung von Biomolekülen aus einer Flüssigkeit mit einem Mikrofluidbestandteil, der mit mindestens einem Mikrokanal (1) versehen ist, welcher mindestens eine von Wänden (2, 3a, 3b) aufweist, welche mehrere Nanoröhren oder Nanodrähte (9) tragen, wobei dieser Bestandteil mindestens eine elektrisch mit mindestens einem Teil der Nanoröhren oder Nanodrähte (9) verbundene Elektrode (11) umfasst und wobei die Vorrichtung Einrichtungen (10) zum Aufbringen einer Spannung zwischen der Elektrode und der Flüssigkeit umfasst, **dadurch gekennzeichnet, dass** die Nanoröhren oder Nanodrähte in mehrere aktive Bereiche (14) unterteilt sind, in welchen die Dichte der Nanoröhren oder Nanodrähte (9) unterschiedlich ist.

2. Vorrichtung gemäß Anspruch 1, **dadurch gekennzeichnet, dass** sich die Dichte jedes Bereichs (14) von einem Bereich zum nächsten in der Zirkulationsrichtung der Flüssigkeit erhöht.

3. Vorrichtung gemäß einem der Ansprüche 1 bis 2, **dadurch gekennzeichnet, dass** jeder Bereich (14) mit einzelnen Elektroden verbunden ist und dass die Vorrichtung verschiedene Einrichtungen (10) zum Aufbringen von Spannung auf die unterschiedlichen Elektroden aufweist.

4. Vorrichtung gemäß einem der Ansprüche 1 bis 3, **dadurch gekennzeichnet, dass** die Nanoröhren oder Nanodrähte (9) senkrechte Barrieren in Bezug auf die Richtung der Flüssigkeit in dem Mikrokanal bilden.

5. Vorrichtung gemäß einem der Ansprüche 1 bis 3, **dadurch gekennzeichnet, dass** die Nanoröhren oder Nanodrähte (9) schräge Barrieren in Bezug auf die Richtung der Flüssigkeit in dem Mikrokanal bilden.

6. Vorrichtung gemäß einem der Ansprüche 1 bis 5, **dadurch gekennzeichnet, dass** die Nanoröhren (9) aus Kohlenstoffbestehen.

7. Vorrichtung gemäß einem der Ansprüche 1 bis 5, **dadurch gekennzeichnet, dass** die Nanodrähte (9) aus dotiertem Silizium bestehen.

## Claims

1. Device for separating biomolecules from a fluid comprising a microfluidic component provided with at least one microchannel (1) having at least one of the walls (2,3a,3b) supporting a plurality of nanotubes or nanowires (9), said component comprising at least one electrode (11) electrically connected to at least a part of the nanotubes or nanowires (9) and the device comprising means (10) for applying a voltage between the electrode and the fluid, device **characterized in that** the nanotubes or nanowires are divided into several active areas (14) in which the nanotubes or nanowires (9) have a different density.

2. Device according to claim 1, **characterized in that** the density of each area (14) increases from one area to the next in the direction of flow of the fluid.

3. Device according to one of claims 1 to 2, **characterized in that** each area (14) is connected to distinct electrodes, and that the device comprises means (10) for applying different voltages to the different electrodes.

4. Device according to any one of claims 1 to 3, **characterized in that** the nanotubes or nanowires (9) form perpendicular barriers to the direction of flow of the fluid in the microchannel.

5. Device according to any one of claims 1 to 3, **characterized in that** the nanotubes or nanowires (9) form oblique barriers with respect to the direction of flow of the fluid in the microchannel.

6. Device according to any one of claims 1 to 5, **characterized in that** the nanotubes (9) are made from carbon.

7. Device according to any one of claims 1 to 5, **characterized in that** the nanowires (9) are made from doped silicon.
